# EUROPÄISCHE PATENTSCHRIFT

(11) **EP 2 751 365 B1**
(45) Veröffentlichungstag und Bekanntmachung des Hinweises auf die Patenterteilung: **13.01.2016**
(21) Anmeldenummer: 12758762.4
(22) Anmeldetag: 22.08.2012
(51) Int. Cl.: E05F 15/603, E05F 15/608

(54) **ANTRIEBSVORRICHTUNG FÜR EINEN KARUSSELLTÜRROTOR**
DRIVE DEVICE FOR A REVOLVING DOOR ROTOR
DISPOSITIF D'ENTRAÎNEMENT POUR ROTOR DE PORTE À TAMBOUR

(30) Priorität: 01.09.2011 DE 102011112172
(43) Veröffentlichungstag der Anmeldung: 09.07.2014
(73) Patentinhaber: Agtatec AG, 8320 Fehraltorf (CH)
(72) Erfinder: AEPPLI, Heinz-Peter, CH-8489 Wildberg (CH); HEDINGER, Samuel, 8604 Volketswill (CH)
(74) Vertreter: Flach, Dieter Rolf Paul
(86) Internationale Anmeldenummer: PCT/EP2012/003556
(87) Internationale Veröffentlichungsnummer: WO 2013/029763

(56) Entgegenhaltungen:
- DE-A1- 19 734 399
- DE-A1-102004 060 282
- DE-U1-202006 000 044

## Beschreibung

Die vorliegende Erfindung betrifft eine Karusselltür nach dem Oberbegriff des Anspruchs 1.

Karusselltüren werden insbesondere als repräsentative, einen Blickfang darstellende Lösungen für eine Eingangspassage an einem Gebäude benutzt. Derartige Karussell- oder Drehtüren können außerhalb oder innerhalb einer Fassadenwand oder wandmittig installiert werden.

Eine Karusselltür weist üblicherweise kreisbogenförmig gekrümmte Seitenwände auf, zwischen denen sich mittig ein Rotor dreht. Von einer mittigen Rotorachse ausgehend sind in Radialrichtung verlaufend beispielsweise zwei, drei oder mehrere in Umfangsrichtung in gleichen Winkelabständen versetzt zueinander liegende Rotorflügel angeordnet. Karusselltüren können durch einen insbesondere als Elektromotor ausgestalteten Antriebsmotor angetrieben werden. Der Antriebsmotor ist dabei üblicherweise über eine als Schneckengetriebe ausgestaltete Getriebeeinrichtung und eine als Zahnriemen ausgestaltete Kraftübertragungseinrichtung mit dem Rotor der Karusselltüre bewegungsgekoppelt.

Weiterhin umfasst die Steuerung zum Anfahren der Karusselltür üblicherweise Annäherungssensoren, die Bereiche vor dem Karusselltüreingang und dem Karusselltürausgang überwachen und ein Annähern einer Person oder eines Gegenstandes an die Karusselltür detektieren. In einem Kollisionsfall wird ein Abbremsen und/oder Stoppen der Karusselltür durch Signale initiiert, die von Kollisionssensoren ausgegeben werden, die den Überstreichungsbereich der Rotorflügel der Karusselltür überwachen.

Wenn eine Person oder ein Gegenstand im Überstreichungsbereich der Karusselltürflügel durch die Kollisionssensoren detektiert wird, muss der Rotor der Karusselltür abgebremst oder komplett gestoppt werden. Die Abbremsung kann durch den Antriebsmotor erfolgen. Üblicherweise ist zusätzlich eine separate Bremseinrichtung vorgesehen, die ein zuverlässiges Abbremsen des Karusselltürrotors im Falle eines Ausfalls des Antriebsmotors gewährleistet. Die Bremseinrichtung kann als aktiv strombetätigte Magnetbremse realisiert sein, die auch als zweiter elektrischer Sicherheitspfad bezeichnet wird. Der Antriebsmotor ist bei einem entsprechenden Aufbau der Antriebsvorrichtung für eine Karusselltür der erste elektrische Sicherheitspfad.

Da der zweite elektrische Sicherheitspfad bei den aus dem Stand der Technik bekannten Antriebsvorrichtungen von Karusselltüren lediglich zum Abbremsen des Karusselltürrotors verwendet werden kann, muss der Antriebsmotor relativ leistungsstark ausgestaltet sein, was zu einer hohen Belastung des Antriebsstrangs führt.

Eine insoweit dem Stand der Technik entsprechende Ausführungsform ist u.a. auch aus der DE 197 34 399 A1 bekannt geworden. Diese Vorveröffentlichung beschreibt eine Karusselltür, die über zwei Antriebseinheiten angetrieben wird. Ein Treibriemen bzw. Zahnriemen wird verwendet, um letztlich über die Motoren den Rotor der Karusselltür anzutrieben.

Aus der DE 20 2006 000 044 U1 ist eine Karusselltür mit zwei oder mehreren Türflügeln als bekannt zu entnehmen, die ebenfalls eine Antriebsvorrichtung mit zwei Motoren umfasst. Jedem Motor ist jeweils eine Endstufe zugeordnet.

Von daher ist es Aufgabe der vorliegenden Erfindung, eine verbesserte Karusselltür bereitzustellen, die zwei elektrische Sicherheitspfade aufweist, bei der die Belastung des Antriebsstrangs reduziert ist, und bei der die Steuerung vereinfacht ist.

Die Aufgabe wird erfindungsgemäß bezüglich den im Anspruch 1 angegebenen Merkmalen gelöst. Vorteilhafte Ausgestaltungen der Erfindung sind in den Unteransprüchen angegeben.

Die erfindungsgemäße Karusselltür umfasst, wie beim Stand der Technik auch, neben dem eine Hauptantriebsmotorwelle aufweisenden Hauptantriebsmotor einen Nebenantriebsmotor, der eine Nebenantriebsmotorwelle umfasst. Die Hauptantriebsmotorwelle ist dabei mit der Nebenantriebsmotorwelle zumindest mittelbar drehgekoppelt, so dass die Nebenantriebsmotorwelle mit dem Rotor bewegungsgekoppelt ist.

Dabei bildet der Hauptantriebsmotor den ersten elektrischen Sicherheitspfad, da der Karusselltürrotor mittels des Hauptantriebsmotors sowohl angefahren als auch abgebremst werden kann. Der Nebenantriebsmotor bildet den zweiten elektrischen Sicherheitspfad, da mittels des Nebenantriebsmotors der Karusselltürrotor angefahren und abgebremst werden kann.

Da die Nebenantriebsmotorwelle mit der Hauptmotorantriebswelle zumindest mittelbar drehgekoppelt ist, kann der Karusselltürrotor durch den Hauptantriebsmotor und den Nebenantriebsmotor gemeinsam angetrieben werden, so dass die Belastung des Antriebsstranges motorseitig reduziert ist. Weiterhin können der Hauptantriebsmotor und der Nebenantriebsmotor kleiner dimensioniert sein als ein einzelner eine Karusselltür antreibender Antriebsmotor.

Die Sicherheit der Antriebsvorrichtung ist gewährleistet, da ein Abbremsen bzw. Stoppen des Karusselltürrotos bei einem Ausfall des Hauptantriebsmotors durch den Nebenantriebsmotor erfolgen kann, wohingegen bei einem Ausfall des Nebenantriebsmotors ein Abbremsen bzw. Stoppen des Karusselltürrotors durch den Hauptantriebsmotor erfolgen kann. Insofern umfasst die erfindungsgemäße Karruselltür eine Antriebsvorrichtung mit einer redundanten Bremseinrichtung und mit einer redundanten Antriebseinrichtung für den Karusselltürrotor.

Die erfindungsgemäße Lösung zeichnet sich dadurch aus, dass die Antriebsvorrichtung eine Kupplungseinrichtung umfasst, mittels der die Hauptantriebsmotorwelle mit der Nebenantriebsmotorwelle drehgekoppelt ist. Mittels einer entsprechenden Kupplungseinrichtung lässt sich eine Drehkopplung der Hauptantriebsmotorwelle mit der Nebenantriebsmotorwelle auf sehr einfache und kostengünstige Weise realisieren.

Dabei lässt sich im Rahmen der Erfindung nicht nur die Belastung des Antriebsstranges reduzieren, da bei Bedarf der Antrieb z.B. nur über den Hauptantriebsmotor erfolg kann, ohne dass die weitere Masse des Nebenantriebsmotors immer mit bewegt werden muss, sondern es ist dabei auch eine servicefreundliche Gesamt-Konzeption geschaffen, da in einem Servicefall nur eine defekte Antriebseinheit ausgebaut und ersetzt werden kann und muss, wohingegen die intakte Antriebseinheit verbleiben kann. Im Falle einer Antriebseinrichtung mit beispielsweise zwei Motoren, die auf einer gemeinsamen Motorachse sitzen, wäre dies nicht möglich.

Die Erfindung wird nachfolgend anhand von Ausführungsbeispielen weiter erläutert. Dabei zeigen im Einzelnen:
- Figur 1:: eine schematische Darstellung einer aus dem Stand der Technik bekannten Karusselltür mit einer Antriebsvorrichtung, die mit einem Karusselltürrotor bewegungsgekoppelt ist;
- Figur 2:: eine schematische Darstellung einer erfindungsgemäßen Karusselltür, die mit einem Karusselltürrotor bewegungsgekoppelt ist; und
- Figur 3:: eine schematische Darstellung einer nicht zur Erfindung gehörenden Antriebsvorrichtung mit einer abgewandelten Steuerung einer Karusselltür.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

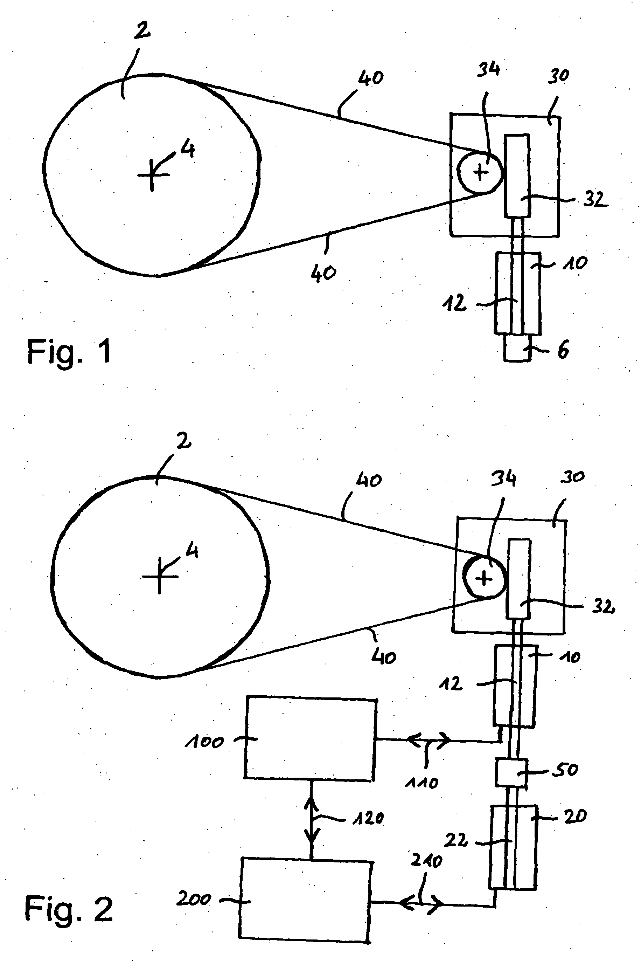

Figur 1 zeigt eine schematische Darstellung einer aus dem Stand der Technik bekannten Karusselltür mit einer Antriebsvorrichtung für einen Rotor einer Karusselltür. Die Antriebsvorrichtung umfasst einen Antriebsmotor bzw. Hauptantriebsmotor 10 mit einer Hauptantriebsmotorwelle 12, die mit einer Getriebeeinrichtung 30 in Form eines Schneckengetriebes 30 bewegungsgekoppelt ist. Die Hauptantriebsmotorwelle 12 ist mit einer Schneckenwelle 32 drehverbunden. Das nicht dargestellte Gewinde der Schneckenwelle 32 kämmt mit einem schrägverzahnten Schneckenrad 34, wobei die Verzahnung des Schneckenrads 34 in Figur 1 nicht dargestellt ist.

Das Schneckenrad 34 ist über eine Kraftübertragungseinrichtung 40 in Form eines Riemens 40 oder eines Zahnriemens 40 mit einem Rotorantrieb 2 in Form eines Riemenrads 2 bewegungsgekoppelt. Das Riemenrad 2 ist an einer Stirnseite eines nicht dargestellten Rotors einer Karusselltür drehfest verbunden, wobei der Rotor um seine Zentralachse 4 drehbar gelagert ist.

Somit ist der Karusselltürrotor mit dem Hauptantriebsmotor 10 bewegungsgekoppelt, so dass der Karusselltürrotor durch den Hauptantriebsmotor 10 sowohl angefahren als auch abgebremst bzw. gestoppt werden kann.

Die in Figur 1 dargestellte Antriebsvorrichtung umfasst ferner eine Bremseinrichtung 6, die als aktiv strombetätigte Magnetbremse ausgestaltet sein kann. Die Bremseinrichtung 6 ist mit der Hauptantriebsmotorwelle 12 in Wirkverbindung, so dass die Bremseinrichtung 6 mit dem Karusselltürrotor bewegungsgekoppelt ist. Im Falle eines Funktionsausfalls des Hauptantriebsmotors 10 dient die Bremseinrichtung 6 als ein zweiter elektrischer Sicherheitspfad und kann den Karusselltürrotor abbremsen oder stoppen.

Figur 2 zeigt einen Karusselltürrotor mit einer Antriebsvorrichtung gemäß der vorliegenden Erfindung. Die Antriebsvorrichtung der erfindungsgemäßen Karusselltür unterscheidet sich von der oben beschriebenen Antriebsvorrichtung dadurch, dass auf eine Bremseinrichtung 6 als zweiter elektrischer Sicherheitspfad verzichtet wird, und dass die Antriebsvorrichtung einen Nebenantriebsmotor 20 mit einer Nebenantriebsmotorwelle 22 und eine Kupplungseinrichtung 50 umfasst, mittels der die Nebenantriebsmotorwelle 22 mit der Hauptantriebsmotorwelle 12 drehgekoppelt ist.

Da die Nebenantriebsmotorwelle 22 mit der Hauptantriebsmotorwelle 12 drehgekoppelt ist, ist die Nebenantriebsmotorwelle 22 mit der Kraftübertragungseinrichtung 40 bzw. mit dem Riemen 40 bewegungsgekoppelt.

Im Normalbetrieb, wenn weder der Hauptantriebsmotor 10 noch der Nebenantriebsmotor 20 ausgefallen sind, kann der Karusselltürrotor durch den Hauptantriebsmotor 10 und den Nebenantriebsmotor 20 gemeinsam angefahren und/oder abgebremst bzw. gestoppt werden. Da der Hauptantriebsmotor 10 und der Nebenantriebsmotor 20 die zum Anfahren und/oder Abbremsen des Karusselltürrotors notwendige Kraft bzw. Leistung gemeinsam erbringen, ist die Belastung für sowohl den Hauptantriebsmotor 10 als auch für den Nebenantriebsmotor 20 verglichen mit der Belastung eines Antriebsmotors einer aus dem Stand der Technik bekannten Karusselltür mit einer entsprechenden Antriebsvorrichtung reduziert.

Im Falle eines Funktionsausfalls des Hauptantriebsmotors 10, wenn der Hauptantriebsmotor 10 den Karusselltürrotor nicht abbremsen oder stoppen kann, dient der Nebenantriebsmotor 20 als der zweite elektrische Sicherheitspfad und kann den Karusselltürrotor abbremsen oder stoppen. Auch kann der Nebenantriebsmotor 20 den Karusselltürrotor anfahren bzw. beschleunigen, so dass bei einem kompletten Funktionsausfall des Hauptantriebsmotors 10 die Funktion der Karusselltür aufrecht erhalten werden kann.

Im Falle eines Funktionsausfalls des Nebenantriebsmotors 20, wenn der Nebenantriebsmotor 20 den Karusselltürrotor nicht abbremsen oder stoppen kann, dient der Hauptantriebsmotor 10 als der erste elektrische Sicherheitspfad und kann den Karusselltürrotor abbremsen oder stoppen. Auch kann der Hauptantriebsmotor 10 den Karusselltürrotor anfahren bzw. abbremsen, so dass bei einem kompletten Funktionsausfall des Nebenantriebsmotors 20 die Funktion der Karusselltür aufrecht erhalten werden kann. Der Hauptantriebsmotor 10 ist über eine bidirektionale Datenleitung 110 mit einer Hauptsteuerungseinrichtung 100 verbunden. Über die Datenleitung 110 kann die Hauptsteuerungseinrichtung 100 Befehlssignale an den Hauptantriebsmotor 10 senden, die ein Anfahren und/oder Abbremsen des Hauptantriebsmotors 10 initiieren. Weiterhin kann der Hauptantriebsmotor 10 über die Datenleitung 110 Signale an die Hauptsteuerungseinrichtung 100 übertragen, die einen Ausfall des Hauptantriebmotors 10 anzeigen.

Die Hauptsteuerungseinrichtung 100, die auch als Master-Steuerung 100 dienen kann, ist über eine bidirektionale Datenleitung 120 mit einer Nebensteuerungseinrichtung 200, die auch als eine Slave-Steuerung 200 dienen kann, verbunden. Die Nebensteuerungseinrichtung 200 ist über eine bidirektionale Datenleitung 210 mit dem Nebenantriebsmotor 20 verbunden, um diesem Befehlssignale zum Anfahren und/oder Abbremsen zu übermitteln. Ein Ausfall des Nebenantriebsmotors 20 kann über die Datenleitung 210 an die Nebensteuerungseinrichtung 200 übertragen werden, die dieses Ausfallsignal über die Datenleitung 120 an die Hauptsteuerungseinrichtung 100 überträgt.

Die Hauptsteuerungseinrichtung 100 und die Nebensteuerungseinrichtung 200 können auch durch Treibermodule ersetzt werden, die von einer Zentralsteuerungseinrichtung angesteuert werden.

Im Normalbetrieb, wenn weder der Hauptantriebsmotor 10 noch der Nebenantriebsmotor 20 ausgefallen sind, kann der Rotorantrieb 2 gemeinsam von dem Hauptantriebsmotor 10 und dem Nebenantriebsmotor 20 angetrieben und/oder abgebremst bzw. gestoppt werden. Dafür gibt die Hauptsteuerungseinrichtung 100 ein entsprechendes Signal an den Hauptantriebsmotor 10 und an die Nebensteuerungseinrichtung 200 aus, die wiederum ein Signal zum Anfahren oder Abbremsen des Nebenantriebsmotors 20 ausgibt.

Im Falle eines Ausfalls des Hauptantriebsmotors 10 gibt die Hauptsteuerungseinrichtung 100 kein Signal zum Anfahren oder Abbremsen an den Hauptantriebsmotor 10, jedoch ein Signal an die Nebensteuerungseinrichtung 200 aus, so dass diese ein entsprechendes Signal zum Anfahren oder Abbremsen an den Nebenantriebsmotor 20 sendet. Damit treibt lediglich der Nebenantriebsmotor 20 den Rotorantrieb 2 an oder bremst diesen ab.

Im Falle eines Ausfalls des Nebenantriebsmotors 20 gibt die Hauptsteuerungseinrichtung 100 ein Signal zum Anfahren oder Abbremsen an den Hauptantriebsmotor 10, jedoch kein Signal an die Nebensteuerungseinrichtung 200 aus, so dass lediglich der Hauptantriebsmotor 10 den Rotorantrieb 2 antreibt bzw. abbremst.

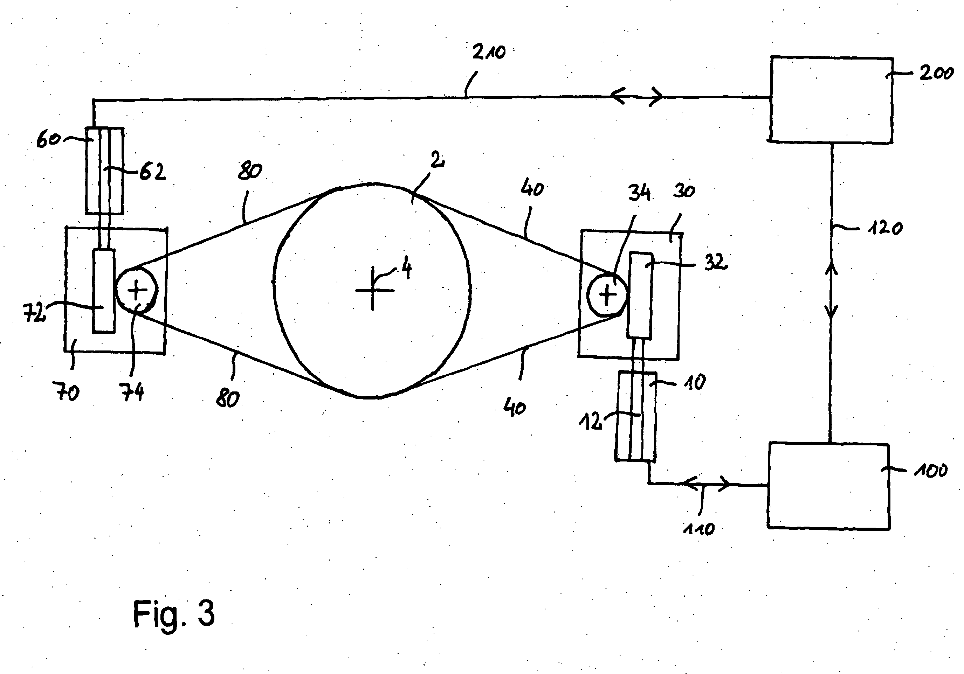

Figur 3 zeigt ein weiteres Beispiel einer nicht zur Erfindung gehörenden Karusselltür. Diese Antriebsvorrichtung ist ähnlich der in Figur 2 dargestellten Antriebsvorrichtung aufgebaut, umfasst aber ferner ein Zusatzschneckengetriebe 70 mit einer Zusatzschneckenwelle 72 und einem Zusatzschneckenrad 74, und einen Zusatzriemen 80, der als Zahnriemen ausgestaltet sein kann. Die Nebenantriebsmotorwelle 62 ist mit der Hauptantriebsmotorwelle 12 mittels des Zusatzschneckengetriebes 70, des Zusatzriemens 80, des Zahnriemens 40 und des Schneckengetriebes 30 drehgekoppelt.

Die Funktionsweise des Anfahrens bzw. Abbremsens des Karusselltürrotors mittels des Nebenantriebsmotors 60, des Zusatzschneckengetriebes 70 und des Zusatzriemens 80 entspricht der Funktionsweise des Anfahrens bzw. Abbremsens des Karusselltürrotors mittels des Hauptantriebsmotors 10, des Schneckengetriebes 30 und des Riemens 40, die mit Bezug auf Figur 1 beschrieben wurde, so dass auf die dortige Beschreibung verwiesen wird.

Der Karusselltürrotor ist über das Riemenrad 2 und den Riemen 40 mit dem Hauptantriebsmotor 10 bewegungsgekoppelt. Gleichzeitig ist der Karusselltürrotor über das Riemenrad 2 und den Zusatzriemen 80 mit dem Nebenantriebsmotor 60 bewegungsgekoppelt. Somit ist die in Figur 3 dargestellte Antriebsvorrichtung redundant mit einem ersten und einem zweiten elektrischen Sicherheitspfad ausgestaltet.

Die Steuerung des Hauptantriebmotors 10 und des Nebenantriebmotors 60 mittels der Hauptsteuerungseinrichtung 100 und der Nebensteuerungseinrichtung 200 ist identisch mit der Steuerung des Hauptantriebmotors 10 und des Nebenantriebmotors 20, die mit Bezug auf Figur 2 oben beschrieben ist, so dass auf die entsprechenden Abschnitte verwiesen wird.

## Patentansprüche

1. Karusselltür mit den folgenden Merkmalen:
- mit einem Rotor;
- der Rotor umfasst zumindest zwei Flügel und einen Rotorantrieb (2);
- der Rotor dreht um eine Zentralachse (4);
- mit einer Antriebsvorrichtung, worüber der Rotorantrieb (2) und damit der Rotor antreibbar und/oder abbremsbar ist;
- die Antriebsvorrichtung umfasst einen Hauptantriebsmotor (10) mit einer Hauptantriebsmotorwelle (12), die über eine Getriebeeinrichtung (30) mit einer Kraftübertragungseinrichtung (40) bewegungsgekoppelt ist, die zum Antrieb des Rotors mit dem Rotorantrieb (2) bewegungsgekoppelt ist;
- die Antriebsvorrichtung umfasst einen Nebenantriebsmotor (20, 60) mit einer Nebenantriebsmotorwelle (22, 62);
- die Hauptantriebsmotorwelle (12) ist mit der Nebenantriebsmotorwelle (22, 62) zumindest mittelbar drehgekoppelt, so dass die Nebenantriebsmotorwelle (22, 62) mit dem Rotor bewegungsgekoppelt ist;
**gekennzeichnet durch** die folgenden weiteren Merkmale:
- die Antriebsvorrichtung umfasst ferner eine Kupplungseinrichtung (50); und
- die Hauptantriebsmotorwelle (12) ist mittels der Kupplungseinrichtung (50) mit der Nebenantriebsmotorwelle (22) drehgekoppelt.

2. Karusselltür nach Anspruch 1, **gekennzeichnet durch** die folgenden Merkmale:
- die Getriebeeinrichtung (30) umfasst ein Schneckengetriebe (30) mit einer Schneckenwelle (32) und einem Schneckenrad (34); und
- die Kraftübertragungseinrichtung (40) umfasst einen Riemen (40), vorzugsweise einen Zahnriemen (40).

3. Karusselltür nach einem der vorangehenden Ansprüche, **gekennzeichnet durch** die folgenden Merkmale:
- die Antriebsvorrichtung umfasst ferner eine mit dem Hauptantriebsmotor (10) verbundene Hauptsteuerungseinrichtung (100) und eine mit dem Nebenantriebsmotor (20, 60) und mit der Hauptsteuerungseinrichtung (100) verbundene Nebensteuerungseinrichtung (200);
- die Nebensteuerungseinrichtung (200) ist dazu ausgebildet, von der Hauptsteuerungseinrichtung (100) oder von einer Zentralsteuerungseinrichtung Steuersignale zu empfangen;
- die Hauptsteuerungseinrichtung (100) umfasst einen Signaleingang zum Empfangen eines Startsignals, das ein Anfahren der Karusselltür initiiert, und/oder eines Stoppsignals, das ein Abbremsen und/oder Stoppen der Karusselltür initiiert;
- bei Empfangen eines Startsignals oder eines Stoppsignals **durch** die Hauptsteuerungseinrichtung (100) oder **durch** die Zentralsteuerungseinrichtung steuert die Nebensteuerungseinrichtung (200) den Zusatzantriebsmotor (20, 60) derart, dass dieser zum Anfahren oder Abbremsen der Karusselltür aktiviert wird.

4. Karusselltür nach Anspruch 3, **gekennzeichnet durch** die folgenden Merkmale:
- die Hauptsteuerungseinrichtung (100) umfasst ferner einen Ausfallsignaleingang zum Empfangen eines Ausfallsignals des Hauptantriebmotors (10);
- die Nebensteuerungseinrichtung (200) umfasst ferner einen Ausfallsignaleingang zum Empfangen eines Ausfallsignals des Nebenantriebmotors (10);
- bei Empfangen des Startsignals oder des Stoppsignals und ohne Empfangen eines Ausfallsignals des Hauptantriebmotors (10) und des Nebenantriebmotors (20, 60) steuert die Hauptsteuerungseinrichtung (100) dass der Hauptantriebsmotor (10) und/oder der Nebenantriebsmotor (20, 60) zum Anfahren oder Abbremsen der Karusselltür aktiviert wird/werden;
- bei Empfangen des Startsignals oder des Stoppsignals und Empfangen des Ausfallsignals des Hauptantriebmotors (10) steuert die Hauptsteuerungseinrichtung (100) die Nebensteuerungseinrichtung (200) derart, dass der Nebenantriebsmotor (20, 60) zum Anfahren oder Abbremsen der Karusselltür aktiviert wird; und
- bei Empfangen des Startsignals oder des Stoppsignals und bei Empfangen des Ausfallsignals des Nebenantriebmotors (20, 60) steuert die Hauptsteuerungseinrichtung (100) den Hauptantriebsmotor (10) zum Anfahren oder Abbremsen der Karusselltür.

5. Karusselltür nach einem der vorangehenden Ansprüche, **dadurch gekennzeichnet, dass** der Hauptantriebsmotor (10) und/oder der Nebenantriebsmotor (20) jeweils einen Elektromotor umfassen.

## Claims

1. Revolving door, comprising the following features:
- comprising a rotor;
- the rotor comprises at least two blades and a rotor drive (2);
- the rotor rotates about a central axis (4);
- comprising a drive device by means of which the rotor drive (2), and thereby the rotor, can be driven and/or braked;
- the drive device comprises a main drive motor (10) having a main-drive-motor shaft (12) which is coupled for movement to a power transmission means (40) via a gear means (30), which power transmission means is coupled for movement to the rotor drive (2) for driving the rotor;
- the drive device comprises an auxiliary drive motor (20, 60) having an auxiliary-drive-motor shaft (22, 62);
- the main-drive-motor shaft (12) is at least indirectly coupled for rotation to the auxiliary-drive-motor shaft (22, 62), so that the auxiliary-drive-motor shaft (22, 62) is coupled for movement to the rotor,
**characterised by** the following further features:
- the drive device further comprises a coupling means (50); and
- the main-drive-motor shaft (12) is coupled for rotation to the auxiliary-drive-motor shaft (22) by means of the coupling means (50).

2. Revolving door according to claim 1, **characterised by** the following features:
- the gear means (30) comprises a worm gear (30) having a worm shaft (32) and a worm wheel (34); and
- the power transmission means (40) comprises a belt (40), preferably a toothed belt (40).

3. Revolving door according to either of the preceding claims, **characterised by** the following features:
- the drive device further comprises a main control means (100) connected to the main drive motor (10) and an auxiliary control means (200) connected to the auxiliary drive motor (20, 60) and to the main control means (100);
- the auxiliary control means (200) is designed to receive control signals from the main control means (100) or from a central control means;
- the main control means (100) comprises a signal input for receiving a start signal which initiates starting of the revolving door, and/or a stop signal which initiates braking and/or stopping of the revolving door;
- upon receipt of a start signal or a stop signal by the main control means (100) or by the central control means, the auxiliary control means (200) controls the supplementary drive motor (20, 60) such that said motor is activated in order to start or brake the revolving door.

4. Revolving door according to claim 3, **characterised by** the following features:
- the main control means (100) further comprises a malfunction signal input for receiving a malfunction signal from the main drive motor (10);
- the auxiliary control means (200) further comprises a malfunction signal input for receiving a malfunction signal from the auxiliary drive motor (10);
- upon receiving the start signal or the stop signal and not receiving a malfunction signal from the main drive motor (10) and the auxiliary drive motor (20, 60), the main control means (100) controls that the main drive motor (10) and/or the auxiliary drive motor (20, 60) is/are activated in order to start or brake the revolving door;
- upon receiving the start signal or the stop signal and receiving the malfunction signal from the main drive motor (10), the main control means (100) controls the auxiliary control means (200) such that the auxiliary drive motor (20, 60) is activated in order to start or brake the revolving door; and
- upon receiving the start signal or the stop signal and upon receiving the malfunction signal of the auxiliary drive motor (20, 60), the main control means (100) controls the main drive motor (10) in order to start or brake the revolving door.

5. Revolving door according to any of the preceding claims, **characterised in that** the main drive motor (10) and/or the auxiliary drive motor (20) each comprise an electric motor.

## Revendications

1. Porte à tambour comprenant les éléments techniques suivants :
- un rotor ;
- le rotor inclut au moins deux panneaux et un entraînement de rotor (2) ;
- le rotor tourne autour d'un axe central (4) ;
- un dispositif d'entraînement, au moyen duquel l'entraînement de rotor (2) et avec lui le rotor est susceptible d'être entraîné et/ou freiné ;
- le dispositif d'entraînement inclut un moteur d'entraînement principal (10) avec un arbre de moteur d'entraînement principal (12), qui est couplé en termes de déplacement via un dispositif à engrenages (30) avec un système de transmission de force (40), lequel est couplé en termes de déplacement avec l'entraînement de rotor (2) pour l'entraînement du rotor ;
- le dispositif d'entraînement inclut un moteur d'entraînement annexe (20, 60) avec un arbre de moteur d'entraînement annexe (22, 62) ;
- l'arbre de moteur d'entraînement principal (12) est couplé en rotation, au moins indirectement, avec l'arbre de moteur d'entraînement annexe (22, 62), de sorte que l'arbre de moteur d'entraînement annexe (22, 62) est couplé en termes de déplacement avec le rotor ;
**caractérisée par** les caractéristiques suivantes :
- le dispositif d'entraînement inclut en outre un système d'embrayage (50) ; et
- l'arbre de moteur d'entraînement principal (12) est couplé en rotation avec l'arbre de moteur d'entraînement annexe (22) au moyen du système d'embrayage (50).

2. Porte à tambour selon la revendication 1, **caractérisée par** les caractéristiques suivantes :
- le dispositif à engrenages (30) inclut un mécanisme à vis sans fin (30) avec un arbre de vis sans fin (32) et une vis sans fin (34) ; et
- le système de transmission de force (40) inclut une courroie (40), de préférence une courroie dentée (40).

3. Porte à tambour selon l'une des revendications précédentes, **caractérisée par** les caractéristiques suivantes :
- le dispositif d'entraînement inclut en outre un système de commande principal (100) connecté avec le moteur d'entraînement principal (10) et un système de commande annexe (200) connecté avec le moteur d'entraînement annexe (20, 60) et avec le système de commande principal (100) ;
- le système de commande annexe (200) est réalisé pour recevoir des signaux de commande venant du système de commande principal (100) ou d'un système de commande centralisé ;
- le système de commande principal (100) inclut une entrée de signal pour recevoir un signal de départ, qui initialise un démarrage de la porte à tambour, et/ou un signal d'arrêt, qui initialise un freinage et/ou un arrêt de la porte à tambour ;
- lors de la réception d'un signal de départ ou d'un signal d'arrêt par le système de commande principal (100) ou par le système de commande centralisé, le système de commande annexe (200) commande le moteur d'entraînement supplémentaire (20, 60) de telle façon que celui-ci est activé pour démarrer ou pour freiner la porte à tambour.

4. Porte à tambour selon la revendication 3, **caractérisée par** les caractéristiques suivantes :
- le système de commande principal (100) inclut en outre une entrée de signal de défaillance pour recevoir un signal de défaillance du moteur d'entraînement principal (10) ;
- le système de commande annexe (200) inclut en outre une entrée de signal de défaillance pour recevoir un signal de défaillance du moteur d'entraînement annexe (20, 60) ;
- lors de la réception du signal de démarrage ou du signal d'arrêt et sans réception d'un signal de défaillance du moteur d'entraînement principal (10) ou du moteur d'entraînement annexe (20, 60), le système de commande principal (100) commande de telle façon que le moteur d'entraînement principal (10) et/ou le moteur d'entraînement annexe (20, 60) est/sont activé(s) pour démarrer ou pour freiner la porte à tambour ;
- lors de la réception du signal de départ ou du signal d'arrêt et de la réception du signal de défaillance du moteur d'entraînement principal (10), le système de commande principal (100) pilote le système de commande annexe (200) de telle façon que le moteur d'entraînement annexe (20, 60) est activé pour démarrer ou pour freiner la porte à tambour ; et
- lors de la réception du signal de démarrage ou du signal d'arrêt et de la réception du signal de défaillance du moteur d'entraînement annexe (20, 60), le système de commande principal (100) commande le moteur d'entraînement principal (10) pour démarrer ou pour freiner la porte à tambour.

5. Porte à tambour selon l'une des revendications précédentes, **caractérisée en ce que** le moteur d'entraînement principal (10) et/ou le moteur d'entraînement annexe (20) incluent chacun un moteur électrique.
